# EUROPEAN PATENT SPECIFICATION

(11) **EP 4 460 842 B1**
(45) Date of publication and mention of the grant of the patent: **28.10.2026**
(21) Application number: 22835054.2
(22) Date of filing: 15.12.2022
(51) Int. Cl.: H01G 4/20, H01G 4/18, H01G 4/12, H01G 4/30, H01G 4/32, H01G 4/33

(54) **COMPOSITE DIELECTRIC MATERIAL, CAPACITOR AND METHODS FOR PRODUCING SAID COMPOSITE DIELECTRIC MATERIAL AND SAID CAPACITOR**
DIELEKTRISCHES VERBUNDMATERIAL, KONDENSATOR UND VERFAHREN ZUR HERSTELLUNG DES DIELEKTRISCHEN VERBUNDMATERIALS UND DES KONDENSATORS
MATÉRIAU DIÉLECTRIQUE COMPOSITE, CONDENSATEUR ET PROCÉDÉS DE FABRICATION DUDIT MATÉRIAU DIÉLECTRIQUE COMPOSITE ET DUDIT CONDENSATEUR

(30) Priority: 04.01.2022 EP 22150126
(43) Date of publication of application: 13.11.2024
(73) Proprietor: University of Southern Denmark, 5230 Odense M (DK)
(72) Inventor: GREENBANK, William Albert, 5230 Odense M (DK); EBEL, Thomas, 5230 Odense M (DK)
(74) Representative: Høiberg P/S
(86) International application number: PCT/EP2022/086042
(87) International publication number: WO 2023/131491

(56) References cited:
- WO-A1-2015/006030
- CN-A- 108 456 386
- CN-A- 111 234 382
- CN-A- 113 736 195
- JP-A- 2010 121 050
- US-A1- 2004 169 992
- SU JUN ET AL: "Recent development on modification of synthesized barium titanate (BaTiO3) and polymer/BaTiO3dielectric composites", JOURNAL OF MATERIALS SCIENCE: MATERIALS IN ELECTRONICS, CHAPMAN AND HALL, LONDON, GB, vol. 30, no. 3, 11 December 2018 (2018-12-11), pages 1957 - 1975, XP036713574, ISSN: 0957-4522, [retrieved on 20181211], DOI: 10.1007/S10854-018-0494-Y

## Description

The present invention relates to a composite dielectric material, a capacitor, a method for producing said composite dielectric material as well as to a method for producing a capacitor. Document "Recent development on modification of synthesized barium titanate (BaTiO3) and polymer/BaTiO3dielectric composites", Su Jun, Zhang Jun,Journal of Materials Science: Materials in Electronics (2019) 30:1957-1975, discloses a composite dielectric material comprising a thermoplastic polymer and a plurality of particles dispersed in said main body and made of a dielectric ceramic material, wherein each of said particles is at least partially coated with a shell comprising said thermoplastic polymer.

Capacitors are one of the fundamental components used in electrical circuits. The functions that capacitors perform in circuits with respect to current stabilization and short-term energy storage are becoming more and more important, particularly in the automotive industry due a rapidly growing electric vehicle market that seeks more efficient drives and better regenerative braking as well as in medical technology, where a specific aim is to increase efficiency of production and minimize installation space. All of these applications require capacitors that are smaller and more reliable, comprise higher breakdown voltages, and improved temperature resistance. In each of these properties, there are categories of materials that perform well, but no one material performs well across all of these requirements. One of the most common capacitor types used for high-voltage applications is polymer foil capacitors often fabricated from biaxially-oriented polypropylene.

The thinnest commercially available polypropylene foil for capacitor applications is about 1.6 µm thick which is achieved by extruding melted polypropylene and then stretching the film parallel and perpendicular to the direction of extrusion. While options for thinner structures exist, such as co-extrusion, fabricating thinner dielectrics is generally not achievable in thermoplastic processing due to the mechanical constraints of the stretching process.

A solution that is frequently explored is to use nanostructured fillers to boost the performance/resilience of the capacitor.

Particularly, US 2020/0376785 A1 discloses a composite film comprising a polymer material that includes a plurality of particles of high dielectric permittivity ceramic filler, said high dielectric permittivity ceramic filler having a core-shell structure, a core of said core-shell structure having a different composition than a shell of said core-shell structure, wherein particularly said shell includes one or more materials selected from the group consisting of Al₂O₃, SiO₂, Si₃N₄, MgO, aluminosilicates, mica, and diamond. Furthermore, US 2020/0376784 A1 discloses a method for producing such a capacitor.

However, when such fillers are added in a melt processing fabrication method like extrusion, agglomeration and clustering of the fillers can become a significant issue, likely driven by surface energy minimization.

Based on the above, the problem to be solved by the present invention is to provide a composite dielectric material, a capacitor, a method for producing a composite dielectric material, as well as a method for producing a capacitor, which allows to alleviate or essentially eliminate the above described difficulty of agglomeration and clustering.

This problem is solved by a composite dielectric material comprising the features of claim 1 as well as by a capacitor having the features of claim 10, a method having the features of claim 11, and a method having the features of claim 15.

According to claim 1, a composite dielectric material is enclosed, comprising:
- a main body comprising a thermoplastic polymer, and
- a plurality of particles dispersed in said main body, wherein said particles essentially consist of or comprises a dielectric ceramic material, wherein each of said dielectric particles is at least partially coated with a shell comprising said thermoplastic polymer.

Particularly, said dielectric ceramic material (particularly barium titanate, see below), forms an outer surface of the respective particle, wherein said thermoplastic material forming said shell contacts the outer surface of the respective particle.

In the context of the present specification, the term "dielectric ceramic material" is used within it meaning known to and used by the skilled person. It particularly refers to a dielectric inorganic oxide, nitride or carbide material. Preferred dielectric ceramic materials are characterized by a dielectric constant, of at least 1000, preferably of at least 5000.

Thus, particularly, while the respective particle is made of said dielectric ceramic material and is - in this sense - homogenous, the at least partly surrounding shell is made of the same thermoplastic material that also forms said body/bulk material in which the particles with their respective shell are embedded.

Advantageously, as will be described in more detail below, such a composite dielectric material can be formed using a layer-by-layer (LBL) fabrication. LBL fabrication is a "bottom-up" additive fabrication technique, wherein an object is printed one layer at a time. In the context of a composite dielectric material (e.g. for a capacitor), this may involve successive depositions of a liquid or gel-like ink, which in the following is referred to as thermoplastic polymer gel, to form single layers (e.g. on the 100 nm length scale) to build a dielectric layer. This opens many opportunities for potential applications. The first and perhaps most obvious is the fine thickness control that it affords, i.e., dielectric layers can be formed that are much thinner than conventional foils and a precise control of the thickness is possible by varying the number of layers or tuning the concentration of the ink.

Furthermore, as with 3D printing, LBL deposition of a (composite) dielectric material allows morphology control by adding particle, particularly nanoparticle fillers to individual layers to enhance thermal conductivity, dielectric constant, and breakdown voltage. Unlike adding fillers to a melt, this strategy allows control of the distribution of the fillers throughout the thickness of the dielectric material and can be paired with modelling to optimize the distribution of electric field in the dielectric. This technique can also be used to greatly enhance the volumetric capacitance of a foil capacitor by interleaving electrodes into the printing process, thereby forming a multilayer capacitor. Furthermore, this technique can be scaled up easily through the use of slot-die coating, e.g. in a roll-to-roll (R2R) production line, allowing rapid printing of dielectrics with minimal solvent waste.

Furthermore, according to an embodiment, each of said dielectric particles is non-covalently bonded and thus coated with a shell comprising said thermoplastic polymer, i.e., the thermoplastic polymer of the shell adheres to the particle by mean of non-covalent bonds, e.g., van-der-Waals forces, hydrophobic interaction or the like.

Further, according to an embodiment of the composite dielectric material, the thermoplastic polymer is characterized by a dielectric strength of at least 100 MV/m, particularly in the range from 100 MV/m to 1000 MV/m, more particular in the range of 200 MV/m to 700 MV/m. Furthermore, according to an embodiment, the thermoplastic polymer is characterized by a self-healing capability.

Furthermore, according to a preferred embodiment of the composite dielectric material according to the present invention, the thermoplastic polymer is polypropylene (CAS Number 9003-07-0). Particularly, according to an embodiment of the invention, the thermoplastic polymer is selected from the group comprised of: polypropylene (CAS number 9003-07-0), polystyrene (CAS number 9003-53-6), polyimide (e.g. Kapton), polyethylene terephthalate (CAS number 25038-59-9, polyethylene naphthalate (CAS number 25853-85-4), polyphenylene sulfide (CAS number 25212-74-2), polyamide, polyethylene (CAS number 9002-88-4), particularly low density polyethylene (LDPE) and high density polyethylene (HDPE).

Further, according to an embodiment of the composite dielectric material, the dielectric ceramic material is a ferroelectric dielectric ceramic material or a ceramic material having perovskite structure. According to an embodiment of the invention, the dielectric ceramic material is selected from the group of high-K dielectrics (i.e. dielectric materials having a high dielectric constant as compared to silicon dioxide) and/or from the group of relaxor ferroelectrics, such as, for example, barium titanate (BaTiO₃), strontium titanate (SrTiO₃), calcium copper titanate (CaCu₃Ti₄O₁₂), strontium iron molybdate (Sr₂FeMoO₆), lanthanum calcium manganite ((LaCa)MnO₃), lanthanum strontium manganite ((LaSr)MnO₃), lanthanum barium manganite ((LaBa)MnO₃), praseodymium calcium manganite ((PrCa)MnO₃), strontium niobium oxide (SrNbO₃), lanthanum manganite (La₂MnO₃), bismuth manganite (BiMnO₃), yttrium manganite (YMnO₃), terbium manganite (TbMnO₃), bismuth nickel manganite (Bi₂NiMnO₆), lanthanum iron chromate (La₂FeCrO₆), bismuth iron chromate (Bi₂FeCrO₆), copper chrome selenide (CuCr₂Se₄), cadmium chrome selenide (CdCr₂Se₄), lanthanum nickel manganite (La₂NiMnO₆) and neodymium chromate (NdCrO₃). According to a preferred embodiment, the dielectric ceramic material is barium titanate (BaTiO₃). According to another embodiment, the dielectric material is silicon dioxide (SiO₂) or aluminum oxide (Al₂O₃).

Furthermore, according to an embodiment of the composite dielectric material, said particles are nanoparticles, which are particularly characterized by a mean diameter in the range from 20 nm to 100 nm, particularly about 50 nm.

In the context of the present specification, the term "mean diameter" is used within its meaning known to and used by skilled person. It particularly refers to the arithmetic mean or median of a particle diameter or size distribution of the above described plurality of particles.

According to a further embodiment of the composite dielectric material, the shell is characterized by a mean thickness of less than or equal to 15 nm, particularly in the range of 1 nm to 10 nm, preferable in range of 1 nm to 5 nm. In one embodiment, the shell is characterized by a mean thickness of less than 1 nm.

In the context of the present specification, the term "mean thickness" is used within its meaning known to and used by skilled person. It particularly refers to the arithmetic mean or median of a thickness distribution of the shells coating each of the above described plurality of particles.

Further, according to an embodiment of the composite dielectric material said main body comprises a plurality of layers (e.g., being stacked on top of one another), particularly at least one first layer and at least one second layer, the at least one first layer comprising a density of said particles that is larger than a density of said particles in the at least one second layer.

Furthermore, according to yet another embodiment of said composite dielectric material, the main body of the composite dielectric material comprises a plurality of first layers and a plurality of second layers (e.g. being stacked on top of one another), wherein the first layers comprise a larger density of said particles than the second layers, wherein particularly the first and second layers are arranged in an alternating fashion.

Particularly, according to an embodiment of the invention, the density of said particles of the second layer(s) is at least 10 times smaller, particularly at least 100 times smaller, particularly at least 1000 times smaller than the density of the particles of the first layer(s). Particularly, the density of the particles in the second layer(s) is zero, or in other word, the second layer(s) is essentially devoid of or essentially free form particles.

As indicated above, the present invention also relates to a capacitor, wherein particularly each of the above- described regarding the composite dielectric material may also be used to further specify the capacitor according to the present invention. According to this aspect of the present invention, a capacitor is disclosed, comprising:
- a layer comprising or being formed out the composite dielectric material according to the present invention,
- a first electrode (having e.g., a first polarity), and
- a second electrode (having e.g., a second polarity opposite to said first polarity), wherein said layer is arranged between the first electrode and second electrode such that said first and second electrodes are electrically insulated from each other by said layer.

Particularly, the layer comprises a first surface and a second surface, the first and the second surface facing away from one another, the first electrode being arranged on the first surface, the second electrode being arranged on the second surface.

Furthermore, according to yet another aspect of the present invention, a medical device is disclosed, particularly an implantable medical device, comprising a capacitor according to the present invention. In an embodiment, the implantable medical device may be one of: an implantable cardiac pacemaker, an implantable leadless pacemaker (also denoted as intracardiac pacemaker), an implantable cardioverter-defibrillator. Particularly, the capacitor is configured to store energy to allow the respective implantable medical device to generate an electrical pulse (e.g. for applying therapy to a person).

According to yet another aspect of the present invention, a method for producing a composite dielectric material, the method comprising the steps of:
(a) Providing a mixture, the mixture comprising a preferably printable gel comprising a thermoplastic polymer, and a dispersion comprising particles consisting of a dielectric ceramic material, each particle being at least partially coated with a shell comprising or being formed out of the thermoplastic polymer, and
(b) Depositing at least one layer of said mixture for producing the composite dielectric material.

Particularly, the step (a) of providing said mixture comprises sonicating the mixture prior to step (b).

According to a preferred embodiment, providing particles consisting of a dielectric ceramic material, each particle being at least partially coated with a shell comprising the thermoplastic polymer includes the steps of: providing a solution or gel comprising the thermoplastic polymer and a first solvent, and adding particles consisting of a dielectric ceramic material to the solution or gel to yield a suspension comprising the thermoplastic polymer and the particles consisting of a dielectric ceramic material. In one embodiment, the solution or gel comprising the thermoplastic polymer and the first solvent is provided by mixing the thermoplastic polymer and the first solvent and subsequently heating of the mixture. In one embodiment, the suspension comprising the thermoplastic polymer and the particles consisting of a dielectric ceramic material is cooled, particularly rapidly cooled, particularly to or below room temperature. In one embodiment, a second solvent is added to the suspension before cooling, wherein particularly the second solvent is more polar than the first solvent. In one embodiment, the thermoplastic polymer is polypropylene. In one embodiment, the first solvent is toluene. In one embodiment, the second solvent is dimethyl sulfoxide (DMSO). In one embodiment, the mixture is heated to temperature of 140°C.

Furthermore, according to a preferred embodiment of the method, step (b) further comprises depositing, prior or after depositing said at least one layer of said mixture, at least one layer of the gel comprising the thermoplastic polymer (i.e., without said particles).

Furthermore, according to a further embodiment of the method, step (b) further comprises depositing, prior or after depositing said at least one layer of said mixture, at least one other layer of the gel comprising the thermoplastic polymer with said particles in a different concentration or other particles (i.e. made of a different dielectric ceramic material).

Further, according to a preferred embodiment of the method, step (b) corresponds to depositing a plurality of layers of said mixture and a plurality of layers of said gel for forming the composite dielectric material, wherein said layers of said mixture and said layers of said gel are particularly deposited in an alternating fashion so as to generate a sequence of alternating layers of said mixture and said gel.

Furthermore, according to a preferred embodiment of the method according to the present invention, the respective layer (e.g., first and/or second layer(s)) is characterized by a thickness in the range from 50 nm to 200 nm, particularly 90 nm to 180 nm.

Particularly, depositing of the respective layer corresponds to printing the respective layer. Particularly in an embodiment, the respective layer is deposited or printed using a slot-die coating or another suitable printing technique.

Particularly, according to an embodiment of the method, for proving said gel comprising the thermoplastic polymer, the thermoplastic polymer (particularly in form of a powder) is mixed with a solvent and the resulting mixture is heated to a temperature below the melting point of the thermoplastic polymer to dissolve the thermoplastic polymer in the solvent to obtain a solution. In a preferred embodiment, said thermoplastic polymer is polypropylene. Further, in a preferred embodiment said solvent is toluene. Further, in an embodiment, said temperature to which the mixture is heated is 120°C.

Further, in an embodiment of the method, the solution is mixed with heated water, the water particularly comprising a temperature of 90°C, and the resulting mixture of said solution and said water is homogenized to form an emulsion. Furthermore, in an embodiment, the emulsion is forced to cream by centrifuging it yielding creamed mixture.

Furthermore, in an embodiment of the method o-xylene is added to the creamed mixture and the mixture is swirled or lightly stirred and sonicated, wherein a resulting turbid and translucent upper phase is isolated and homogenized resulting in the thermoplastic polymer gel (particularly polypropylene gel). The above described procedure is also denoted as high-temperature emulsification (HTE) synthesis of thermoplastic polymer (e.g. polypropylene) gel.

According to an alternative embodiment of the method, the thermoplastic polymer (particularly in form of a powder) is mixed with a solvent and the resulting mixture heated to a temperature below the melting point of the thermoplastic polymer to dissolve the thermoplastic polymer in the solvent to obtain a solution. Preferably, said thermoplastic polymer is polypropylene. Further, preferably, said solvent is a mixture of toluene and xylene (particularly the solvent comprises 50 wt.-% toluene and 50 wt.-% xylene) Furthermore, preferably, the said temperature to which the resulting mixture of said thermoplastic polymer and solvent is heated is 140°C.

Furthermore, preferably, the solution is cooled, particularly rapidly cooled, particularly to a temperature in the range of 10 °C to 20 °C (e.g., by immersing it in a suitable container in stirring cold water) to form a gel at room temperature (e.g. 20°C). Then, preferably, said solvent comprising toluene and xylene is added to the cooled gel and the resulting mixture is homogenized to form the thermoplastic polymer gel (particularly polypropylene gel).

The above described alternative procedure is also denoted as super-cooled gel (SGC) method.

Furthermore, said dispersion comprising particles consisting of a dielectric ceramic material each particle comprising a shell comprising or being formed out of the thermoplastic polymer, may be produced according to the following embodiment of the method for producing the composite dielectric material.

Particularly, the thermoplastic polymer (particularly polypropylene) is mixed with suspension of particles consisting of a dielectric ceramic material, particularly a barium titanate suspension (particularly a suspension in a solvent, particularly toluene), and a solvent (particularly toluene) and the resulting mixture is heated to a temperature (particularly to a temperature of 140°C). Furthermore, in an embodiment of the method, dimethyl sulfoxide (DMSO) is heated to the same temperature and the mixture of said thermoplastic polymer, barium titanate suspension and solvent is dispensed into the DMSO under stirring, resulting in a mixture forming a precipitate, which mixture is cooled while being sonicated and then centrifuged. The DMSO is removed from the centrifuged mixture as much as possible and the remaining precipitate is repeatedly washed with a washing agent (particularly at least twice with ethanol then twice with o-xylene (C₆H₄(CH₃)₂, CAS Number 95-47-6) resulting in a suspension that is preferably concentrated down by centrifuging and removing a majority of the o-xylene. Finally, the suspension is preferably homogenized to yield said dispersion. Particularly, said particles are barium titanate nanoparticles at least partly coated with the thermoplastic polymer, particularly polypropylene. Said particles may comprise concentration of at least 1.3 wt.-% in said dispersion.

Furthermore, in step (a) of the above-described method, providing the gel as described above forms an aspect of the present invention on its own that may be claimed independently. The same applies to providing said dispersion.

According to yet another aspect of the present invention, a method for producing a capacitor (particularly according to the present invention) is disclosed, the method comprising the steps of:
- providing a first electrode,
- depositing a composite dielectric material on the first electrode using the method according to the present invention, and
- arranging a second electrode on the composite dielectric material.

In the following, embodiments as well as further features and advantages of the present invention shall be described with reference to the Figures, wherein
- Fig. 1: shows a schematic cross-sectional view (left-hand side) and a top view of the composite dielectric material and the capacitor according to the present invention, said material forming a component of the capacitor; the right-hand side shows a top view onto the capacitor,
- Fig. 2: shows a schematic illustration of an example for producing a thermoplastic polymer gel according to the present invention,
- Fig. 3: shows a schematic illustration of another example for producing a thermoplastic polymer gel according to the present invention,
- Fig. 4: shows a schematic illustration of an example for producing a dispersion comprising particles at least partially enclosed by a shell formed by the thermoplastic polymer on which said gel is based,
- Fig. 5: shows an example of a method for producing a capacitor comprising the composite dielectric material according to the present invention,
- Fig. 6: shows measurements of uncoated (left-hand side) and coated particles (right-hand side) as illustrated in Fig. 4,
- Fig. 7: shows a TEM image of a barium titanate nanoparticle of the composite dielectric material, the particle being coated with **PP** (indicated by the arrow on the right-hand side).

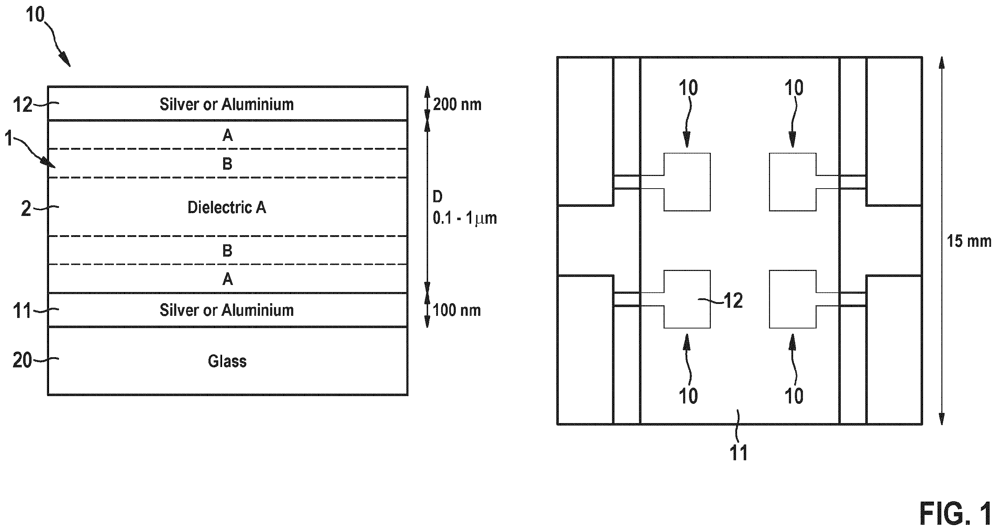

Fig. 1 shows a schematic illustration of an embodiment of a capacitor 10 according to the present invention, the capacitor 10 comprising a composite dielectric material 1 according to the present invention.

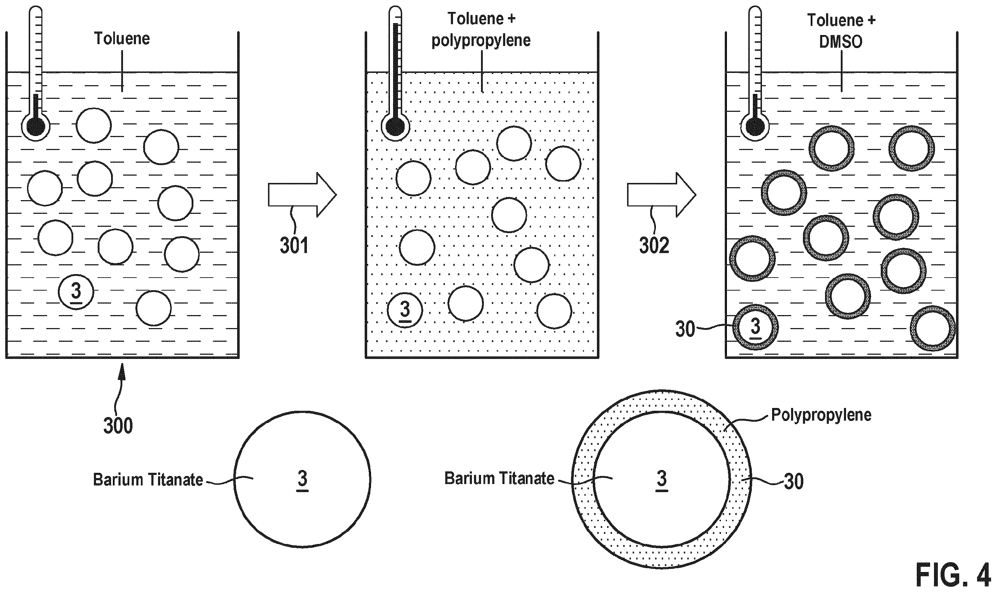

Particularly, the composite dielectric material 1 comprises a main body 2 comprising a thermoplastic polymer, preferably polypropylene, and a plurality of particles 3 (cf. e.g., Fig. 4) dispersed in said main body 2, wherein said particles 3 are made of a dielectric ceramic material, particularly barium titanate, wherein each of said particles 3 is at least partially coated with a shell 30 comprising said thermoplastic polymer (as e.g. indicated in Fig. 4).

The main body 2 is arranged between a first (e.g. bottom) electrode 11 and a second (e.g. top electrode). The main body 2 may be formed as at least one layer comprising a thickness in a direction orthogonal to the electrodes 11, 12 that is smaller than the extensions of the layer orthogonal to said direction D. Particularly, the electrodes 11, 12 oppose one another in said direction. The main body 2 (at least one layer) may comprise a thickness in the range from 0.1µm to 1 µm according to an embodiment in said direction D. Further, in an embodiment, the first (e.g. bottom) electrode 11 may comprise a thickness of about 100 nm in said direction D while the second (e.g. top) electrode 12 may comprise a thickness of about 100 nm to 200 nm in said direction D. However, thinner electrodes are also conceivable.

### Example 1 (Cryo-pulverisation of polypropylene pellets)

In order to provide the thermoplastic polymer gel as well as a dispersion comprising said particles 3, particularly nanoparticles 3, comprising said shell 30. A first step can be conducted in which commercially supplied polypropylene pellets can be transformed into a more manageable powder that can be more easily dissolved and used in chemical processes described in the following. The following materials may be used for this step.

### Materials

- Amorphous polypropylene (Sigma Aldrich/Merck #428175-1KG, Lot #MKCH0909, melting point between 150°C to 160°C),
- Liquid nitrogen.

For turning the polypropylene into a powder, liquid nitrogen is added to a large ceramic mortar and pestle in small quantities to cool it to cryogenic temperatures. Once cooled, a small quantity of polypropylene pellets is added to the mortar and further liquid nitrogen to cool the pellets. The pellets are then carefully ground to a coarse white powder and stored in a 40 mL glass vial. Thereby, the starting material has an average particle size of about 6 to 7 mm and is grounded to a particle size below 1 mm, particularly to increase the solubility.

### Example 2 (High-temperature emulsification (HTE) synthesis of polypropylene gel)

This step is to synthesise the polypropylene gel (also denoted as ink) that can be used to form the composite dielectric layer/material 1 of the capacitor 10. The polypropylene in this ink will be the matrix material for the nanocomposite dielectric. The ink can also be used without modification to fabricate pure polypropylene dielectric layers if desired. The following materials may be used for this step.

### Materials

- Polypropylene powder (300mg), e.g. generated as described above in example 1,
- Toluene (Sigma Aldrich/Merck #179418-1L, purity ≥99.5%, 4 mL),
- o-Xylene (Sigma Aldrich/Merck #8086971000, purity ≥99.9%, 4 mL),
- Deionised water (prepared on-site, 16 mL).

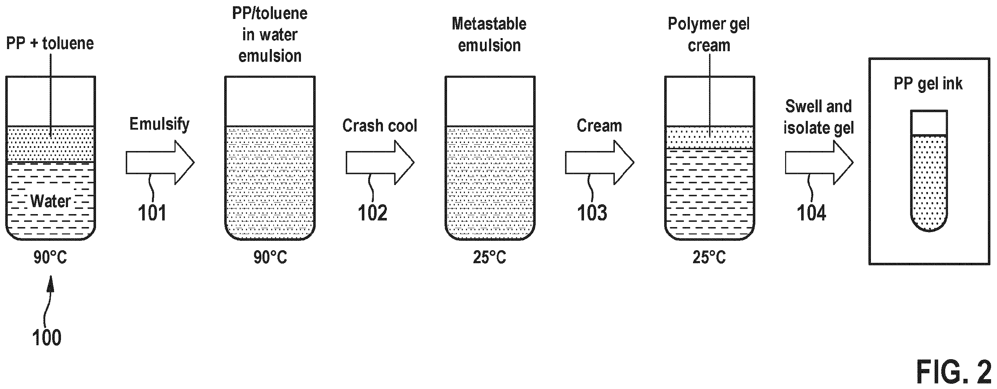

The polypropylene (PP) and toluene are placed in a clean 20 mL glass vial which is sealed and heated at 120°C below the melting point of the used polypropylene to dissolve. The used polypropylene is not soluble at room temperature, but is soluble in some solvents like toluene and xylene above 100°C. This takes around 45 minutes. Separately, the water is added to a 40 mL glass vial into which the probe of an Ultra-Turrax homogeniser (IKA) is also inserted. The water vial is then heated to 90°C. Once visually homogeneous, the polypropylene/toluene solution is then added to the water vial (100), as indicated in Fig. 2, while the homogeniser is turned on to its maximum setting. The mixture is then homogenised for 5 minutes, forming an emulsion (101). The emulsion is crash-cooled (102) by immersing the vial in room temperature water. The resulting emulsion is milky in appearance and metastable.

The emulsion is then poured into two 15 mL glass centrifuge tubes and forced to cream (103) by centrifuging at 3500 RPM for 10 minutes. 2 mL of o-xylene is added to each tube and each tube is swirled before being sonicated for 10 minutes. The turbid, translucent upper phase of each tube is isolated and combined in a test tube (104), then homogenised for 5 minutes at maximum setting. The result is the 5 wt.% polypropylene gel, which is stored in a clean and sealed 20 mL glass vial wrapped in parafilm.

### Example 3 (super-cooled gel (SCG) synthesis of polypropylene gel)

As an alternative to the method described above in conjunction with example 2, the thermoplastic polymer gel may also be formed as outlined below in an exemplary fashion.

This alternative synthesis is motivated by the observation that while the method according to example 2 is highly effective in the LBL fabrication process of forming the composite dielectric material 1 and capacitor 10 according to the present invention, mixing the components while at high temperatures and having a homogeniser running requires caution to avoid superheating either solvent, and the isolation process may be lengthy. Thus, the presence of water may be advantageously reduced in the process to render the process more manageable with respect to higher mass polymers being more sensitive to water.

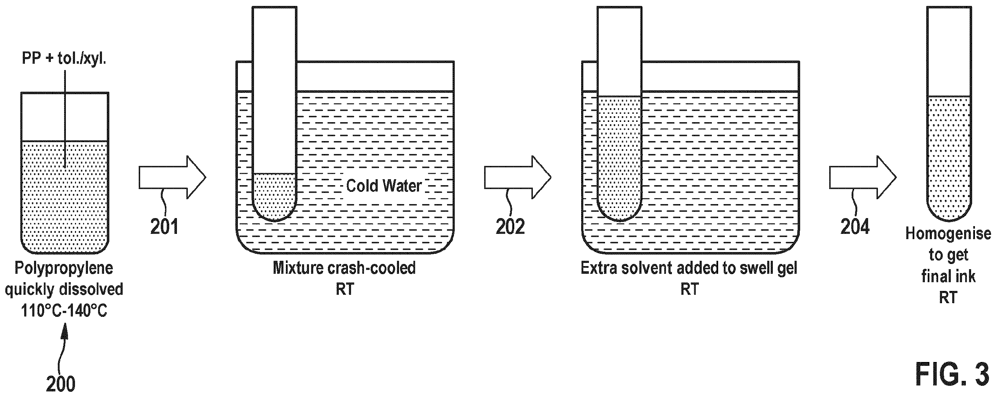

An embodiment of the alternative synthesis is outlined in Figure 3. While emulsion formation likely ensures that the gel domains formed are kept relatively small, the formation of the emulsion is likely not responsible for the formation of the gel. This is because a gel is effectively a supercooled solution of a polymer in a good solvent, and in this case, toluene is the only component that would act as a good solvent for polypropylene. In example 3 therefore the cooling step is emphasised, particularly ensuring that the hot polypropylene solution cools as rapidly as possible to room temperature. This increases homogeneity of the gel which is also beneficial in a later printing/depositing process of the gel/ink. To achieve this, rapidly cooling the polypropylene solution via heat exchange with cold water may used (cf. step 201 in Fig. 3). This proved to be highly effective at gel production. This variant of the synthesis of the thermoplastic polymer gel is also denoted as super-cooled gel (SCG) method.

Particularly, in this procedure a 50 wt.-% / 50 wt.-%-blend of toluene and o-xylene may be used to dissolve the polypropylene instead of pure toluene (e.g. example 2), as indicated in step 200 of Fig. 3. Testing revealed that this combination is more effective at dissolving the thermoplastic polymer, particularly polypropylene, and, due to the sharper temperature gradient, results in higher quality gels. It is also possible that the mixture of the two different solvents makes phase separation more difficult during the gel formation, favouring a more homogenous gel.

In contrast to example 2, the final steps of the variant of the synthesis at hand involves simply adding more solvent (cf. step 202 in Fig. 3) and homogenising (cf. step 204 in Fig. 3). This step helps achieve the desired viscosity/concentration and ensures that the gel domains remain small (ensuring high-quality layers during printing). This process is also significantly faster than the production according to example 2 meaning that gels (inks) may be produced in a couple of hours using the SCG method, rather than a couple of days.

The following procedure is a typical SCG procedure designed to produce a 5 wt.-% polypropylene gel (also denoted as ink), although quantities used may vary. Preferred polypropylene gels have a concentration in the range of 4 wt.-% to 5 wt.-%. All reagents are reagent grade or higher and were obtained from Merck unless otherwise stated.
- 320 mg of cryogenically pulverised polypropylene (see e.g. example 1 above) is weighed into a 20 mL clear glass vial.
- 4 mL of a 50/50 (m/m) mixture of toluene and o-xylene is added to the vial and the vial is sealed.
- The vial is heated to 140°C on a hotplate (cf. step 200 in Fig. 3). A hot air gun may be used if any polymer is crystalizing on the sides of the vial to heat the vial's sides.
- Wait until the polypropylene is fully dissolved (typically around 15 minutes, but allowing an hour is a sensible precaution)
- Using a pre-heated glass Pasteur pipette, rapidly transfer the solution to a test tube immersed in stirring cold water (cf. step 201 in Fig. 3). The test tube may be any volume greater than the solution volume but is particularly as narrow as possible to maximise thermal transfer to the water.
- Allow the gel to come to room temperature and fully form, this should only take a few minutes.
- A further 4 mL of the mixed solvent is added to the cooled gel (cf. step 202 in Fig. 3).
- The resulting mixture is then homogenised for 5 minutes at ca. 30 000 RPM (cf. step 204 in Fig. 3).
- The final gel ink is transferred to a clean, sealed vial for storage.

The resulting thermoplastic polymer (particularly polypropylene) gel/ink is shelf stable for storage times of a few days. Longer storage times may require that the gel/ink is sonicated and/or re-homogenised before use. Advantageously, longer storage times does not appear to have any impact on printed layer quality.

Layers of the composite dielectric material deposited with the gel according to example 3 appear near transparent and are very smooth to the naked eye. So far there has been no noticeable difference in the performance of layers or devices deposited from the gel pursuant to example 3. Thus, the SCG process is an alternative to the HTE for the production of polypropylene gels, particularly for the use in layer-by-layer (LBL) printing of capacitor dielectrics. The SCG method offers the benefits of being efficient, safe, and versatile.

### Example 4 (Core-shell nanoparticle synthesis)

This step is illustrated in Fig. 4 and may be used to form the polypropylene shell 30 around the barium titanate nanoparticles 3 that allows them to disperse well in the polypropylene matrix (i.e. main body 2). Particularly, the dispersion of core-shell nanoparticles 3 is mixed with the gel/ink generated according to the method according to the present invention (cf. also examples 2 and 3) in order to deposit a composite dielectric material / layer 1, particularly as a component of a capacitor 10 according to the present invention.

The example elaborated here theoretically gives an average shell thickness of 15 nm of polypropylene around 50 nm cubic barium titanate nanoparticles. The following material may be used.

### Materials

- 50 nm cubic barium titanate nanoparticle suspension in toluene (US Research Nanomaterials Inc. #US3835, 25.5 wt.%, 547.95 mg).
- polypropylene powder (60.56 mg), e.g., according to example 1 above.
- Toluene (Sigma Aldrich/Merck #179418-1L, purity ≥99.5%, 4.41918 mL).
- Dimethyl sulfoxide (Sigma Aldrich/Merck #276855-2L, purity ≥99.9%, 35 mL).
- Absolute ethanol (Sigma Aldrich/Merck #1009832500, purity ≥99.9%, ca. 100 mL).
- o-Xylene (Sigma Aldrich/Merck #8086971000, purity ≥99.9%, ca. 100 mL).

The polypropylene is mixed with the barium titanate suspension and the toluene in a clean 20 mL glass vial and sealed (cf. step 300 in Fig. 4). The vial is placed on a hot plate left to heat while stirring at 140°C for at least an hour (cf. step 301 in Fig. 4). The DMSO is added to a 50 mL Erlenmeyer flask and heated to the same temperature. The contents of the vial are rapidly added to the Erlenmeyer flask with a heated Pasteur pipette, dispensing the toluene mixture under the surface of the DMSO while very rapidly stirring at 140°C. This causes large amounts of a white precipitate to form. The flask is crash-cooled while being sonicated (cf. step 302 in Fig. 4).

The liquid contents are transferred to four 15 mL glass centrifuge tubes (leaving some solid matter and the stir bar in the flask) and centrifuged at 3500 RPM for 10 minutes. The DMSO is removed as much as possible from the separated mixture and the remaining solid matter is washed with absolute ethanol (which had been placed in the reaction flask to transfer more of the residual solid over). After being topped up with ethanol, the vials are then sonicated and centrifuged again at 3500 RPM for 10 minutes. The ethanol is then removed as much as possible and the process repeated - once more with ethanol, then twice with o-xylene (which effectively transfers all the residual solid from the flask).

This results in approximately 40 mL of suspension spread over four centrifuge tubes. This suspension is then concentrated down to approximately 5 mL by centrifuging at 3500 RPM for 10 minutes, removing most of the o-xylene, sonicating, and combining the contents of the tubes into a single tube. As a final step, the suspension is homogenised with the IKA Ultra-Turrax homogeniser at maximum setting for five minutes before being transferred to a clean 20 mL glass vial sealed with a cap and parafilm for storage. The resulting suspension is completely opaque, milky white and has a concentration around 1.3 wt.% (with regard to the core-shell particles).

### Calculation of theoretical shell thickness

The formula relating the quantity of polypropylene powder to the predicted shell thickness on the nanoparticles is described by equation (1). Note that this assumes a cubic geometry of the particles and ignores any effects from rounding of the corners. In addition, this calculation also assumes a complete transfer of the polymer to the surface of the nanoparticle and represents an upper limit on the shell thickness. ${t}_{P} = \frac{{d}_{B}}{2} \left(\sqrt[3]{1 + \frac{{m}_{P} {ρ}_{B}}{{m}_{B} {ρ}_{P} {X}_{B}}}-1\right)$ ()

The symbols used in equation (1) are described in Table 1.

**Table 1: definition of the symbols in equation (1)**

| Symbol | Definition |
|---|---|
| ***t_{P}*** | Polypropylene shell thickness (nm) |
| ***d_{B}*** | Size of barium titanate nanoparticles (nm) |
| ***m_{P}*** | Mass of polypropylene powder (mg) |
| ***ρ_{B}*** | Bulk density of pure barium titanate (g cm⁻³) |
| ***m_{B}*** | Mass of barium titanate nanoparticle dispersion (mg) |
| ***ρ_{P}*** | Bulk density of amorphous polypropylene (g cm⁻³) |
| ***X_{B}*** | Mass ratio of barium titanate in dispersion (dimensionless) |

### Example 5 (Capacitor fabrication)

Example 5 details how the gels described above (cf. particularly examples 2 and 3) in the previous sections are deposited as dielectric layer(s) that may in particular be used as a dielectric in a capacitor according to the present invention (cf. Fig. 1 left-hand side). The following materials may be used.

### Materials

- 15 mm square glass substrates (minimum 0.5 mm thick)
- 3M^{™} Silane Glass Treatment AP-115
- Technical grade isopropanol and acetone
- Polypropylene gel ink from section 2
- Core-shell nanoparticle suspension from section 3
- Silver epoxy

### Substrate preparation

The glass substrates are degreased by sonicating for 10 minutes in technical acetone, then 10 minutes in technical isopropanol before being blow-dried with compressed dry air or nitrogen. The substrates are then coated with a 100 nm layer of silver via thermal physical vapour deposition. This forms the bottom electrode 11 of the device 10, (e.g. in the pattern shown in Fig. 1 right-hand side). The metallised substrates are then immersed in the 3M^{™} Silane Glass Treatment solution for 30 minutes, following which they are rinsed with technical isopropanol and blow-dried. This final step is particularly carried out within two hours of the deposition of the dielectric layer 2.

Fig. 1 depicts on the left-hand side a cross section of the capacitor 10 comprising the composite dielectric material/layer 2 comprises of a main body 2 with particularly with particles 3 dispersed therein as will be described in the following. The right-hand side shows a top-down view of the layout of the first and second electrodes 11, 12.

### Composite dielectric material (layer) deposition

For this, two gels are prepared for deposition - gels A and B. Gel A is a sample of the polypropylene gel with no further modification. Gel B can be a 50/50 v/v mixture of the polypropylene gel and the core-shell nanoparticle dispersion (e.g. as described in example 4). Both gels can be sonicated for a few minutes before use. However, it is also conceivable to use more than two different gel species in order to manufacture more complex layer composition. As a non-limiting example, one additional gel species may be Gel C comprising polypropylene and silicon dioxide, with which a complex layer composition may be manufactured having a structure such as C-A-B-A-B-A-C, wherein gel A is rather diluted and only used to ensure that the nanoparticles remain separated.

The composite dielectric material 1 can now be built up in multiple depositions of the gels to both tune the thickness and the barium titanate content of the material 1 (and particularly of the capacitor 10 using the material 1). More depositions of gel A means a thicker composite dielectric material (in direction D, cf. Fig. 1), while more of gel B means higher barium titanate content. Particularly, the initial and final depositions are preferably of gel A according to an embodiment, to minimize the risk of persisting conductive paths persist throughout the dielectric.

The thickness of each of the layers A, B of the main body 2 is in the range of 90 nm to 180 nm but is rather dependent on concentration and processing conditions. A typical deposition sequence might be A-B-A-B-A as shown as an example on the left-hand side of Fig. 1. Such an intermediate A-layer between two B-layer particularly has the advantage of spacing out the nanoparticles a bit more to limit clustering and further inhibit breakdown. Herein, the layers A are also denoted as first layers A, while the layers B are denoted as second layers. The second layers B preferably do not comprise particles/nanoparticles 3 according to an embodiment but may also contain particles/nanoparticles 3 of different composition and/or density.

The deposition of the respective first or second layer A, B (e.g. using gel A or gel B) can proceed according to the following example:
- The sample is loaded on to a spin coater (i.e. to deposit of thin layers using liquid inks) and secured with vacuum.
- 60 µL of the desired ink is dripped on to the surface of the sample in such a way that the entire surface is covered.
- The sample is spun at 1200 RPM for 2.5 seconds then quickly removed and placed on a hotplate that has been pre-heated to 160°C.
- The sample is allowed to dry on the hot plate for around two minutes, before being removed and allowed to cool.
- The sample is then transferred to a vacuum oven where it is heated to 120°C before being placed under vacuum for 10 to 20 minutes.
- The oven is pressurised, the sample is removed and allowed to cool.
- The sample is ready for the next deposition.

The hot plate step ensures that the polypropylene gel denatures as it dries (this would be achieved in up-scaling by heating the foil in slot-die coating). The vacuum annealing ensure that no air pockets are trapped during each deposition.

### Device finalisation

The samples are transferred to an e-beam evaporator where the top electrode 12 is deposited e.g. in the pattern shown in Fig. 1 (right-hand side). Silver epoxy is then applied to each of the four corners to protect the contact points with the top electrodes 12 of each of the four devices 10. Contact with the bottom electrode 11 is achieved by scratching near the top and bottom edges of the substrate (from the perspective of Fig. 1, right-hand side) to remove the insulating composite dielectric material/layer 1, then applying silver epoxy to form contact pads. The sample, containing four devices 10, is now ready for testing.

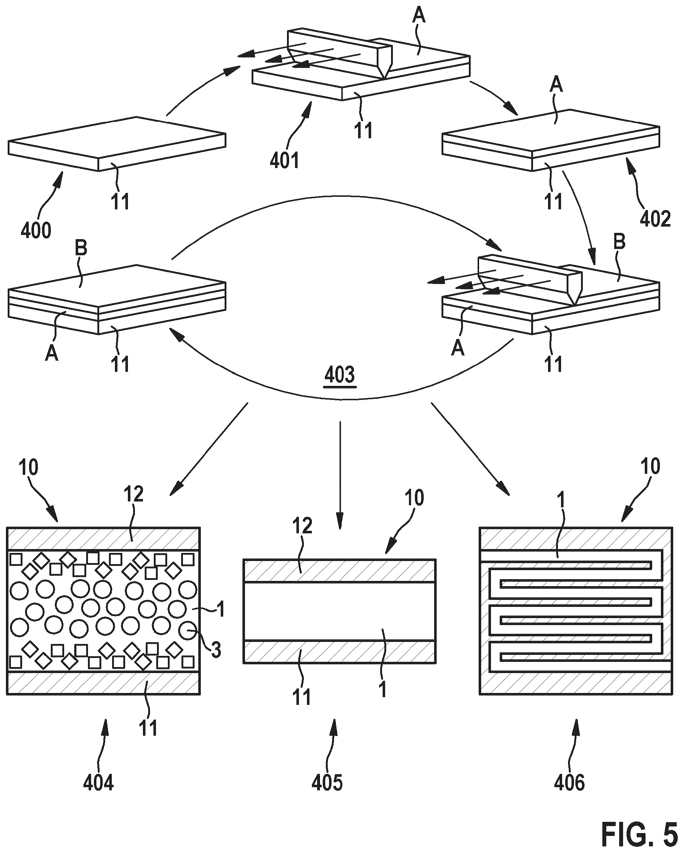

A further embodiment of producing a capacitor 10 according to the present invention is shown in Fig. 5 using an LBL fabrication process, the process begins with a foil substrate (e.g. aluminium) which will serve as bottom electrode 11 and substrate. Then a first coating of a gel A according to the present invention (see e.g. above) is applied to the foil (401) using in particular a high-volume printing technique, such as R2R slot-die coating, which sets to form the first composite dielectric layer (402). Successive coatings are made with the respective gel (e.g. gel A or B) to build up the thickness of the dielectric layer material 1 (403) before the top electrode 12 is deposited. Depending on the combinations of gels A, B and the sequence used, designs such as sandwich nanocomposite capacitors (404), ultrathin polypropylene capacitors (405), and multilayer polypropylene capacitors (406) may be printed.

Particularly, in the "bottom-up" additive fabrication technique shown in Figs. 1 and 5 an item (e.g. material 1 or layers A, B) is printed one layer at a time. In the context of dielectrics for capacitors, this involves successive depositions of a gel/ink to form layers on the e.g. 100 nm length scale to build a dielectric layer as outlined above. This opens many opportunities for potential applications. The first and perhaps most obvious is the fine thickness control that it affords. Dielectric layers A, B can be much thinner than commercially available foils and precise control of the thickness would be possible by varying the number of layers A, B or tuning the concentration of the gel. Furthermore, as with 3D printing, LBL deposition of a dielectric allows morphology control by adding nanoparticle fillers 3 to individual layers A to enhance thermal conductivity, dielectric constant, and breakdown voltage. Unlike adding fillers to a melt, this strategy allows control of the distribution of the fillers 3 throughout the thickness of the dielectric 1 and can be paired with modelling to optimize the distribution of electric field in the composite dielectric material 1. This technique can also be used to greatly enhance the volumetric capacitance of a foil capacitor by interleaving electrodes into the printing process, thereby forming a multilayer capacitor (406).

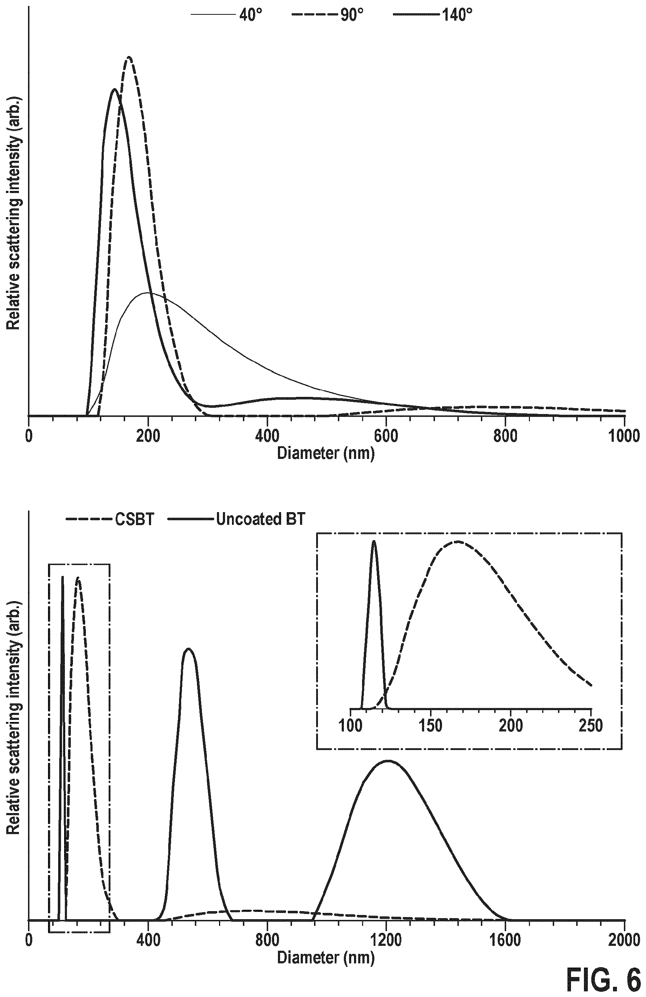

Furthermore, Fig. 6 shows (left) 3D-DLS data obtained from a dispersion of treated nanoparticles 3 with a theoretical shell thickness of 15 nm (see equation (1) above) at a range of scattering angles, and (right) 3D-DLS data comparing the treated nanoparticle dispersion with untreated BT nanoparticles (also in o-xylene) at a scattering angle of 90°. The treated particles show very little tendency to cluster when dispersed, as opposed to the untreated ones which do. There is also a notable difference in scattering diameter between the treated and untreated nanoparticles, which is consistent with the formation of a core-shell architecture. However, the skilled person will appreciate that this measured diameter is the hydrodynamic diameter which has contributions from both the size of the particles and their interaction with the solvent they are suspended in, i.e. the actual radius of gyration of the measured particles is smaller than the measured hydrodynamic radius. Accordingly, the actual measured shell thicknesses seem to be smaller that theoretically expected or calculated (cf. Example 4)

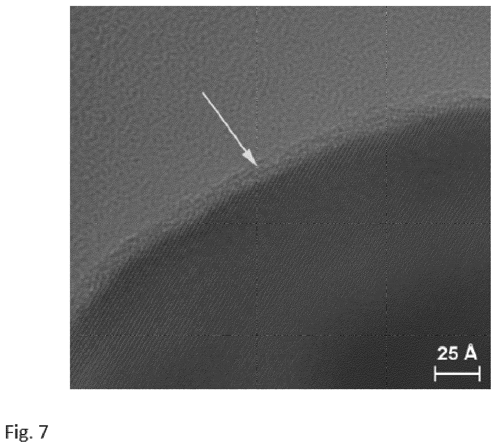

Finally, Fig. 7 illustrates a thin surface coating (indicated by the white arrow on the edge of the depicted particles.

## Claims

1. A composite dielectric material (1) comprising:
- a main body (2) comprising a thermoplastic polymer, and
- a plurality of particles (3) dispersed in said main body (2), wherein said particles (3) are made of a dielectric ceramic material, wherein each of said particles (3) is at least partially coated with a shell (30) comprising said thermoplastic polymer, **characterized in that** each of said particles (3) is non-covalently bonded to said shell (30).

2. The composite dielectric material according to claim 1, wherein the thermoplastic polymer is **characterized by** a dielectric strength in the range from 100 MV/m to 1000MV/m, particularly in the range of 200 MV/m to 700 MV/m.

3. The composite dielectric material according to claim 1 or 2, wherein the thermoplastic polymer is **characterized by** a self-healing capability.

4. The composite dielectric material according to one of the preceding claims, wherein the thermoplastic polymer is selected from the group comprised of: polypropylene, polystyrene, polyimide, polyethylenterephthalate, polyethylene naphthalate, polyphenylensulfide, polyamide, or polyphethylene.

5. The composite dielectric material according to one of the preceding claims, wherein the dielectric ceramic material is a ferroelectric dielectric ceramic material or a ceramic material having perovskite structure.

6. The composite dielectric material according to one of the preceding claims, wherein the dielectric ceramic material is selected from the group comprised of: barium titanate (BaTiO₃), strontium titanate (SrTiO₃), calcium copper titanate (CaCu₃Ti₄O₁₂), strontium iron molybdate (Sr₂FeMoO₆), lanthanum calcium manganite ((LaCa)MnO₃), lanthanum strontium manganite ((LaSr)MnO₃), lanthanum barium manganite ((LaBa)MnO₃), praseodymium calcium manganite ((PrCa)MnO₃), strontium niobium oxide (SrNbO₃), lanthanum manganite (La₂MnO₃), bismuth manganite (BiMnO₃), yttrium manganite (YMnO₃), terbium manganite (TbMnO₃), bismuth nickel manganite (Bi₂NiMnO₆), lanthanum iron chromate (La₂FeCrO₆), bismuth iron chromate (Bi₂FeCrO₆), copper chrome selenide (CuCr₂Se₄), cadmium chrome selenide (CdCr₂Se₄), lanthanum nickel manganite (La₂NiMnO₆), neodymium chromate (NdCrO₃)silicon dioxide (SiO₂) or aluminum oxide (Al₂O₃).

7. The composite dielectric material according to one of the preceding claims. wherein said particles (3) are nanoparticles having a mean diameter in the range from 20 nm to 100 nm, particularly about 50 nm and/or said particles comprises a shell having a mean thickness of less than or equal to 15 nm, particularly in the range of 1 nm to 10 nm, more particularly 1nm to 5 nm.

8. The composite dielectric materials according to one of the preceding claims, wherein the main body (2) of the composite dielectric material comprises a plurality of layers (A, B), wherein said plurality of layers comprises at least one first layer (A) and at least one second layer (B), wherein the at least one first layer (A) comprises a larger density of said particles (3) than the at least one second layer (B).

9. The composite dielectric material according to one of the preceding claims, wherein the main body (2) of the composite dielectric material comprises a plurality of first layers (A) and a plurality of second layers (B), wherein each first layer (A) comprises a larger density of said particles (3) than each second layer (B), wherein particularly the first and second layers (A, B) are arranged in an alternating fashion.

10. A capacitor (10) comprising:
- a layer (A, B) comprising the composite dielectric material (1) according to one of the claims 1 to 9,
- a first electrode (11),
- a second electrode (12),
wherein said layer (A, B) is arranged between the first electrode (11) and second electrode (12).

11. A method for producing a composite dielectric material (1), the method comprising the steps of:
(a) Providing a mixture, the mixture comprising a gel comprising a thermoplastic polymer, and a dispersion comprising particles (3) consisting of a dielectric ceramic material, each particle being at least partially coated by a shell (30) comprising the thermoplastic polymer, wherein said particles are non-covalently bonded to said shell, and
(b) Depositing at least one layer (A) of said mixture for producing the composite dielectric material (1).

12. The method according to claim 11, wherein the step (b) further comprises depositing, prior or after depositing said at least one layer (A) of said mixture, at least one layer (B) of the gel comprising the thermoplastic polymer.

13. The method according to claim 11, wherein step (b) corresponds to depositing a plurality of layers (A) of said mixture and a plurality of layers (B) of said gel for forming the composite dielectric material (1), wherein said layers (A) of said mixture and said layers (B) of said gel are particularly deposited in an alternating fashion.

14. The method according to one of the claims 11 to 13, wherein the respective layer (A, B) is **characterized by** a thickness in the range from 50 nm to 200 nm, particularly 90 nm to 180 nm.

15. A method for producing a capacitor (10), the method comprising
- providing a first electrode (11),
- depositing a composite dielectric material (1) on the first electrode (11) using the method according to one of the claims 11 to 14, and
- arranging a second electrode (12) on the composite dielectric material (1).

## Patentansprüche

1. Verbund-Dielektrikum (1), umfassend:
- Hauptkörper (2), umfassend thermoplastisches Polymer, und
- Mehrzahl von Partikeln (3), die in dem Hauptkörper (2) dispergiert sind, wobei die Partikel (3) aus einem dielektrischen Keramikmaterial hergestellt sind, wobei jedes der Partikel (3) zumindest teilweise mit einer Hülle (30) beschichtet ist, die das thermoplastische Polymer umfasst, **dadurch gekennzeichnet, dass** jedes der Partikel (3) nicht-kovalent mit der Hülle (30) verbunden ist.

2. Verbund-Dielektrikum nach Anspruch 1, wobei das thermoplastische Polymer durch eine dielektrische Festigkeit im Bereich von 100 MV/m bis 1000MV/m, insbesondere im Bereich von 200 MV/m bis 700 MV/m, gekennzeichnet ist.

3. Verbund-Dielektrikum nach Anspruch 1 oder 2, wobei das thermoplastische Polymer durch eine Selbstheilungsfähigkeit gekennzeichnet ist.

4. Verbund-Dielektrikum nach einem der vorhergehenden Ansprüche, wobei das thermoplastische Polymer aus der Gruppe ausgewählt ist, bestehend aus: Polypropylen, Polystyrol, Polyimid, Polyethylenterephthalat, Polyethylennaphthalat, Polyphenylensulfid, Polyamid oder Polyphthylen.

5. Verbund-Dielektrikum nach einem der vorhergehenden Ansprüche, wobei das dielektrische Keramikmaterial ein ferroelektrisches dielektrisches Keramikmaterial oder ein Keramikmaterial mit Perowskitstruktur ist.

6. Verbund-Dielektrikum nach einem der vorhergehenden Ansprüche, wobei das dielektrische Keramikmaterial aus der Gruppe ausgewählt ist, bestehend aus: Bariumtitanat (BaTiO₃), Strontiumtitanat (SrTiO₃), Calciumkupfertitanat (CaCu₃Ti₄O₁₂), Strontiumeisenmolybdat (Sr₂FeMoO₆), Lanthancalciummanganit ((LaCa)MnO₃), Lanthanstrontiummanganit ((LaSr)MnO₃), Lanthanbariummanganit ((LaBa)MnO₃), Praseodymcalciummanganit ((PrCa)MnO₃), Strontiumnioboxid (SrNbO₃), Lanthanmanganit (La₂MnO₃), Bismutmanganit (BiMnO₃), Yttriummanganit (YMnO₃), Terbiummanganit (TbMnO₃), Bismutnickelmanganit (Bi₂NiMnO₆), Lanthaneisenchromat (La₂FeCrO₆), Bismuteisenchromat (Bi₂FeCrO₆), Kupferchromselenid (CuCr₂Se₄), Cadmiumchromselenid (CdCr₂Se₄), Lanthannickelmanganit (La₂NiMnO₆), Neodymchromat (NdCrO₃)Siliciumdioxid (SiO₂) oder Aluminiumoxid (Al₂O₃).

7. Verbund-Dielektrikum nach einem der vorhergehenden Ansprüche. wobei die Partikel (3) Nanopartikel mit einem mittleren Durchmesser im Bereich von 20 nm bis 100 nm, insbesondere etwa 50 nm, sind und/oder die Partikel eine Hülle mit einer mittleren Dicke von kleiner oder gleich 15 nm, insbesondere im Bereich von 1 nm bis 10 nm, besonders bevorzugt 1nm bis 5 nm, umfassen.

8. Verbund-Dielektrika nach einem der vorhergehenden Ansprüche, wobei der Hauptkörper (2) des Verbund-Dielektrikums eine Mehrzahl von Schichten (A, B) umfasst, wobei die Mehrzahl von Schichten zumindest eine erste Schicht (A) und zumindest eine zweite Schicht (B) umfasst, wobei die zumindest eine erste Schicht (A) eine größere Dichte der Partikel (3) aufweist als die zumindest eine zweite Schicht (B).

9. Verbund-Dielektrikum nach einem der vorhergehenden Ansprüche, wobei der Hauptkörper (2) des Verbund-Dielektrikums eine Mehrzahl von ersten Schichten (A) und eine Mehrzahl von zweiten Schichten (B) umfasst, wobei jede erste Schicht (A) eine größere Dichte der Partikel (3) aufweist als jede zweite Schicht (B), wobei insbesondere die ersten und zweiten Schichten (A, B) abwechselnd angeordnet sind.

10. Kondensator (10), umfassend:
- Schicht (A, B), die das Verbund-Dielektrikum (1) nach einem der Ansprüche 1 bis 9 umfasst,
- erste Elektrode (11),
- zweite Elektrode (12),
wobei die Schicht (A, B) zwischen der ersten Elektrode (11) und der zweiten Elektrode (12) angeordnet ist.

11. Verfahren zur Herstellung eines Verbund-Dielektrikums (1), wobei das Verfahren die Schritte umfasst:
(a) Bereitstellen einer Mischung, wobei die Mischung ein Gel umfassend thermoplastisches Polymer und eine Dispersion umfassend Partikel (3), bestehend aus einem dielektrischen Keramikmaterial, umfasst, wobei jedes Partikel zumindest teilweise mit einer Hülle (30) beschichtet ist, die das thermoplastische Polymer umfasst, wobei jedes der Partikel nicht-kovalent mit der Hülle (verbunden ist, und
(b) Abscheiden von zumindest einer Schicht (A) der Mischung zur Herstellung des Verbund-Dielektrikums (1).

12. Verfahren nach Anspruch 11, wobei der Schritt (b) ferner das Abscheiden von zumindest einer Schicht (B) des Gels umfassend das thermoplastische Polymer vor oder nach dem Abscheiden der zumindest einen Schicht (A) der Mischung umfasst.

13. Verfahren nach Anspruch 11, wobei Schritt (b) dem Abscheiden einer Mehrzahl von Schichten (A) der Mischung und einer Mehrzahl von Schichten (B) des Gels zur Bildung des Verbund-Dielektrikums (1) entspricht, wobei die Schichten (A) der Mischung und die Schichten (B) des Gels insbesondere abwechselnd abgeschieden werden.

14. Verfahren nach einem der Ansprüche 11 bis 13, wobei die jeweilige Schicht (A, B) durch eine Dicke im Bereich von 50 nm bis 200 nm, insbesondere 90 nm bis 180 nm, gekennzeichnet ist.

15. Verfahren zur Herstellung eines Kondensators (10), wobei das Verfahren umfasst
- Bereitstellen einer ersten Elektrode (11),
- Abscheiden eines Verbund-Dielektrikums (1) auf der ersten Elektrode (11) unter Verwendung des Verfahrens nach einem der Ansprüche 11 bis 14, und
- Anordnen einer zweiten Elektrode (12) auf dem Verbund-Dielektrikum (1).

## Revendications

1. Matériau diélectrique composite (1) comprenant :
- un corps principal (2) comprenant un polymère thermoplastique, et
- une pluralité de particules (3) dispersées dans ledit corps principal (2), dans lequel lesdites particules (3) sont constituées d'un matériau céramique diélectrique, dans lequel chacune desdites particules (3) est au moins partiellement revêtue d'une enveloppe (30) comprenant ledit polymère thermoplastique, **caractérisé en ce que** chacune desdites particules (3) est liée de manière non covalente à ladite enveloppe (30).

2. Matériau diélectrique composite selon la revendication 1, dans lequel le polymère thermoplastique est **caractérisé par** une rigidité diélectrique dans la plage de 100 MV/m à 1000MV/m, en particulier dans la plage de 200 MV/m à 700 MV/m.

3. Matériau diélectrique composite selon la revendication 1 ou 2, dans lequel le polymère thermoplastique est **caractérisé par** une capacité d'autoréparation.

4. Matériau diélectrique composite selon l'une quelconque des revendications précédentes, dans lequel le polymère thermoplastique est sélectionné dans le groupe comprenant : polypropylène, polystyrène, polyimide, polyéthylènetéréphtalate, naphtalate de polyéthylène, polyphénylènesulfure, polyamide, ou polyphéthylène.

5. Matériau diélectrique composite selon l'une quelconque des revendications précédentes, dans lequel le matériau céramique diélectrique est un matériau céramique diélectrique ferroélectrique ou un matériau céramique ayant une structure pérovskite.

6. Matériau diélectrique composite selon l'une quelconque des revendications précédentes, dans lequel le matériau céramique diélectrique est sélectionné dans le groupe comprenant : titanate de baryum (BaTiO₃), titanate de strontium (SrTiO₃), titanate de cuivre et de calcium (CaCu₃Ti₄O₁₂), molybdate de fer et de strontium (Sr₂FeMoO₆), manganite de lanthane et de calcium ((LaCa)MnO₃), manganite de lanthane et de strontium ((LaSr)MnO₃), manganite de lanthane et de baryum ((LaBa)MnO₃), manganite de praséodyme et de calcium ((PrCa)MnO₃), oxyde de niobium et de strontium (SrNbO₃), manganite de lanthane (La2MnO₃), manganite de bismuth (BiMnO₃), manganite d'yttrium (YMnO₃), manganite de terbium (TbMnO₃), manganite de nickel et de bismuth (Bi₂NiMnO₆), chromate de fer et de lanthane (La₂FeCrO₆), chromate de fer et de bismuth (Bi₂FeCrO₆), séléniure de cuivre et de chrome (CuCr₂Se₄), séléniure de cadmium et de chrome (CdCr₂Se₄), manganite de nickel et de lanthane (La₂NiMnO₆), chromate de néodyme (NdCrO₃)dioxyde de silicium (SiO₂) ou oxyde d'aluminium (Al2O₃).

7. Matériau diélectrique composite selon l'une quelconque des revendications précédentes, dans lequel lesdites particules (3) sont des nanoparticules ayant un diamètre moyen dans la plage de 20 nm à 100 nm, en particulier d'environ 50 nm et/ou lesdites particules comprennent une enveloppe ayant une épaisseur moyenne inférieure ou égale à 15 nm, en particulier dans la plage de 1 nm à 10 nm, plus particulièrement de 1nm à 5 nm.

8. Matériau diélectrique composite selon l'une quelconque des revendications précédentes, dans lequel le corps principal (2) du matériau diélectrique composite comprend une pluralité de couches (A, B), dans lequel ladite pluralité de couches comprend au moins une première couche (A) et au moins une deuxième couche (B), dans lequel ladite au moins une première couche (A) comprend une densité plus élevée desdites particules (3) que ladite au moins une deuxième couche (B).

9. Matériau diélectrique composite selon l'une quelconque des revendications précédentes, dans lequel le corps principal (2) du matériau diélectrique composite comprend une pluralité de premières couches (A) et une pluralité de deuxièmes couches (B), dans lequel chaque première couche (A) comprend une densité plus élevée desdites particules (3) que chaque deuxième couche (B), dans lequel en particulier les premières et deuxièmes couches (A, B) sont disposées de manière alternée.

10. Condensateur (10) comprenant :
- une couche (A, B) comprenant le matériau diélectrique composite (1) selon l'une quelconque des revendications 1 à 9,
- une première électrode (11),
- une deuxième électrode (12),
dans lequel ladite couche (A, B) est disposée entre la première électrode (11) et la deuxième électrode (12).

11. Procédé de production d'un matériau diélectrique composite (1), le procédé comprenant les étapes consistant à :
(a) Fournir un mélange, le mélange comprenant un gel comprenant un polymère thermoplastique, et une dispersion comprenant des particules (3) constituées d'un matériau céramique diélectrique, chaque particule étant au moins partiellement revêtue par une enveloppe (30) comprenant le polymère thermoplastique, dans lequel lesdites particules sont liées de manière noncovalente à l'enveloppe, et
(b) Déposer au moins une couche (A) dudit mélange pour produire le matériau diélectrique composite (1).

12. Procédé selon la revendication 11, dans lequel l'étape (b) comprend en outre le dépôt, avant ou après le dépôt de ladite au moins une couche (A) dudit mélange, d'au moins une couche (B) du gel comprenant le polymère thermoplastique.

13. Procédé selon la revendication 11, dans lequel l'étape (b) correspond au dépôt d'une pluralité de couches (A) dudit mélange et d'une pluralité de couches (B) dudit gel pour former le matériau diélectrique composite (1), dans lequel lesdites couches (A) dudit mélange et lesdites couches (B) dudit gel sont en particulier déposées de manière alternée.

14. Procédé selon l'une quelconque des revendications 11 à 13, dans lequel la couche respective (A, B) est **caractérisée par** une épaisseur dans la plage de 50 nm à 200 nm, en particulier de 90 nm à 180 nm.

15. Procédé de production d'un condensateur (10), le procédé comprenant
- fournir une première électrode (11),
- déposer un matériau diélectrique composite (1) sur la première électrode (11) en utilisant le procédé selon l'une quelconque des revendications 11 à 14, et
- disposer une deuxième électrode (12) sur le matériau diélectrique composite (1).
